# EUROPEAN PATENT SPECIFICATION

(11) **EP 3 732 964 B1**
(45) Date of publication and mention of the grant of the patent: **23.07.2025**
(21) Application number: 18855198.0
(22) Date of filing: 21.12.2018
(51) Int. Cl.: A01N 27/00, A01N 49/00, A01P 19/00

(54) **METHOD FOR EFFECTIVELY CONTROLLING COCCOIDEA INSECT PESTS**
VERFAHREN ZUR EFFEKTIVEN BEKÄMPFUNG VON COCCOIDEA-INSEKTENSCHÄDLINGEN
PROCÉDÉ POUR LUTTER EFFICACEMENT CONTRE DES INSECTES COCOÏDES NUISIBLES

(30) Priority: 27.12.2017 ES 201731480
(43) Date of publication of application: 04.11.2020
(73) Proprietor: Ecologia Y Proteccion Agricola, S.L., 46240 Carlet (ES)
(72) Inventor: NAVARRO FUERTES, Ismael, 46240 Carlet (ES); VACAS GONZÁLEZ, Sandra, 46022 Valencia (ES); NAVARRO LLOPIS, Vicente, 46022 Valencia (ES); MARZO BARGUÉS, Javier, 46240 Carlet (ES); PRIMO MILLO, Jaime, 46022 Valencia (ES); CARBONELL GARCIA, Alejandro, 46240 Carlet (ES)
(74) Representative: ABG Intellectual Property Law, S.L.
(86) International application number: PCT/ES2018/070825
(87) International publication number: WO 2019/129908

(56) References cited:
- EP-A1- 3 213 633
- WO-A1-2016/142775
- ARTURO COCCO ET AL: "Mating Disruption of Planococcus ficus (Hemiptera: Pseudococcidae) in Vineyards Using Reservoir Pheromone Dispensers", JOURNAL OF INSECT SCIENCE, vol. 14, no. 1, 1 January 2014 (2014-01-01), pages 1 - 8, XP055580111, DOI: 10.1093/jisesa/ieu006
- VACAS S: "The first account of the mating disruption technique for the control of California red scale, Aonidiella aurantii Maskell (Homoptera: Diaspididae) using new biodegradable dispensers", BULLETIN OF ENTOMOLOGICAL RESEARCH, LONDON, GB, vol. 99, no. 4, 1 August 2009 (2009-08-01), pages 415 - 423, XP009512901, ISSN: 0007-4853, DOI: 10.1017/S0007485308006470
- SANDRA VACAS ET AL: "Mating disruption of California red scale, Aonidiella aurantii Maskell (Homoptera: Diaspididae), using biodegradable mesoporous pheromone dispensers", PEST MANAGEMENT SCIENCE, vol. 66, no. 7, 15 March 2010 (2010-03-15), BOGNOR REGIS; GB, pages 745 - 751, XP055580108, ISSN: 1526-498X, DOI: 10.1002/ps.1937

## Description

### Field of the art

The present invention belongs to the technical sector of pest control. In particular, the present invention relates to the biorational control of coccoid insect pests (Order Hemiptera, Superfamily Coccoidea).

### Prior art

Coccoid or scale insects (Order Hemiptera, Superfamily Coccoidea) are one of the most difficult pests to handle. They are sucking insects that attack a wide range of plant species, including economically important crops. To date, approximately 7,800 scale species distributed in 49 families have been described (Garcia-Morales et al. ScaleNet: Scale insects (Coccoidea) database (http://scalenet.info) 2016**).** However, armored scales (Family Diaspididae), soft scales (Family Coccidae) and cochineals (Family Pseudococcidae) constitute a considerable group of agricultural pests that cause serious problems and high economic loss, even at low infestation densities.

At present, chemical control is the most widely used technique for combating scale insects. Applications, particularly spraying the plants or substrate, with phytosanitary or organophosphorated products, carbamates, pyrethrins, etc., have been used since 1960. Subsequently, the use of neonicotinoid insecticides and tetronic and tetramic acid derivatives, in addition to mineral oils and vegetables, with questionable effects on useful fauna in the first (Kessler et al. Nature 2015 521(7550), 74-76) and phytoxicity phenomena in the second (Urbaneja et al. Pest Management Science 2008, 64, 834-842). However, the cryptic behavior of coccoids, their protection by means of a hydrophobic waxy cover that repels hydrophilic insecticides, mobile states, formation of dense colonies and overlapping generations, in addition to the resistance developed by some pests render the use of many insecticides ineffective (Franco et al. Biorational Control of Arthropod Pests 2009, pp. 233-278). Additionally, the use and abuse of chemical pesticides generates toxic waste, favors the development of resistance in pest insects and adversely affects natural enemies, causes the uncontrolled proliferation of other pests as a consequence of the reduction and/or elimination of natural enemies and, in general, entails major risks and effects on human health and the environment.

The alternative to chemical control for handling these pests implies the use of biorational methods such as growth regulators, biological control agents and semiochemicals including, namely, sexual pheromones.

Growth regulators include substances such as: azadirachtin, buprofezin, phenoxicarb and/or pyriproxiphen, which may have low toxicity for vertebrates, but may be harmful to parasitoid natural enemies (Rothwangl et al Journal of Economic Entomology 2004, 97, 1239-1244) and to beneficial arthropods (Fourrier et al. PLoS One 2015, 10(7), e0132985).

Biological control agents, i.e. parasitoids and coccoid or scale insect predators, are considered the preferred means of defense from an environmental viewpoint. However, to date this type of method has not been proven to be capable of providing, on its own, an acceptable control of the populations of these insects, or maintaining them below the pest threshold.

Furthermore, sexual pheromones are chemical compounds emitted, generally, by the female for the purpose of attracting the males to mate. These semiochemicals are specific to each species, are biodegradable, do not affect the beneficial insects and favor natural biological balance. To date, the sexual pheromones of only 26 scale insect species have been identified: seven species of the *Diaspididae* family, three species of the *Margarodidae* family and 16 species of the *Pseudococcidae* family (Zou et al. Natural Product Reports 2015, 32,1067-1113; Tabata et al. Journal of Chemical Ecology 2016, 42, 1193-1200; Tabata et al. Journal of The Royal Society Interface 2017, 14, 20170027).

The use of semiochemicals, pheromones and allelochemicals, in the control of insects has grown in the biorational control of pests from their implementation approximately in 1960, and multiple publications can be found in the state of the art. In the following citations, exhaustive examples of the control techniques used against arthropods: Dicke et al. Journal of Chemical Ecology 1990, 16, 3091-3118; Agelopoulos et al Pest Management Science 1999, 55, 225-235; Renou et al. Annual Review of Entomology 2000, 45, 605-630; Witzgall et al. Journal of Chemical Ecology 2010, 36, 80-100; Mani et al. Mealybugs and their Management in Agricultural and Horticultural crops 2016, Springer).

In the particular case of insects of the Coccoidea superfamily, the use of sexual pheromones is aimed mainly at detecting and monitoring populations, and only in the case of two species, *Aonidiella aurantii* Maskell (Scalebur^{®}, Ecology and Agricultural Protection, Valencia) and *Planococcus ficus* Signoret (CheckMate^{®} VMB-XL, Suterra, Bend, USA), sexual pheromone diffusers are marketed for control thereof using the sexual confusion technique. It should be noted that, as opposed to Lepidoptera, the sexual pheromones of these species have more complex chemical structures with defined stereochemistry, which in many cases makes their synthesis complicated, particularly enantioselective synthesis, being its cost unaffordable for treatment using this type of technique (Bakthavatsalam Mealybugs and their Management in Agricultural and Horticultural crops 2016, pp. 173-198). Therefore, the reduced use of sexual pheromones in a biorational treatment of these species is a currently unresolved need.

In the specific case of attraction and death techniques applied to control coccoid insects using their sexual pheromones, various authors point out their ineffectiveness, for example, against the pseudococcid *Planococcus citri* Risso (Franco et al. Anais do Instituto Superior de Agronomia 2003, 49, 353-367) or the diaspidid *A. aurantii* (Aytas et al. Turkish Journal of Agriculture and Forestry 2001, 25, 97-110). In both cases, the reduction of the population of males obtained was insufficient to significantly reduce damages to harvests, considering, in the case of Aytas *et al.,* that the mass capture tactic for controlling the California red scale is an inauspicious method considering the ineffectiveness and cost of the application.

Some of the factors that may influence the results, such as the repellence of males to certain toxins, the density and/or features of the devices to be used, in addition to the importance of the size of the population, have been theoretically analyzed and described by various authors (De Souza et al. Journal of Economic Entomology 1992, 85, 2100-2106; Suckling et al. Pest Management Science 2015, 71, 1452-1461). These factors are considered independently or linearly as in a complicated system wherein the relationships between the parts do not add additional information, obviating in some cases the possible underlying interaction therebetween.

It should be noted that, in all the cases encountered, the common starting point of a possible effective system based on attraction and death to combat these insects is the development of a system for attracting males competitive with the natural semiochemical matrix formed, among other organisms, by the insect population itself. As opposed to sexual confusion and pest monitoring techniques, wherein high or sufficient emissions of sexual pheromones to cause the interruption of copulations in the first case and the capture of a representative number of insects in the second, achieving an optimal emission flow that maximizes the attraction of insects towards a source in a sustained manner over time is crucial for obtaining a positive result by applying any of the techniques based on attraction and affectation.

However, in the aforementioned literature on the application of an attraction and death technique for insects of the Coccoidea superfamily, their attraction to a source is achieved by loading matrix-type emitters with one or more doses of pheromone, giving rise to an emission flow variable in time such as type 1 exponential release kinetics characteristic of this type of emitters. This entails a pheromone concentration gradient in time that does not make it possible to ensure a maximum or optimal attraction throughout the technical application period.

Furthermore, it is known that the number of male individuals attracted to a source within a natural semiochemical matrix can be maximized if an optimal sexual pheromone flow is released into the atmosphere, with release kinetics close to the order 0. In the context of the present invention, optimal flow will be understood to be a semiochemical flow that provides a maximum of male captures within a natural semiochemical matrix. There are various papers in scientific literature wherein this optimal emission flow for insect species of different families is calculated to be as follows: Lepidoptera - 11.3 µg/day of the sexual pheromone of *Lymantria dispar* (L.) (Tortricidae) (Leonhardt et al Journal of Economic Entomology 1990, 83, 1977-1981), 34 µg/day for the pheromone of *Chilo suppressalis* Walker (Crambidae) (Vacas et al. Journal of Economic Entomology 2009, 102, 1094-1100), 400 µg/day for the attraction of *Lobesia botrana* Den. & Schiff. (Tortricidae) (Vacas et al. Entomologia Experimentalis et Applicata 2011, 139, 250-257), a range comprised between 11-67 µg/day for *Cydia pomonella* (L.) (Tortricidae) (Vacas et al. Environmental Entomology 2013, 42, 1383-1389) and 150 µg/day for *Tuta absoluta* (Meyrick) (Gelechiidae) (Vacas et al. Environmental Entomology 2013, 42, 1061-1068); Hemiptera - 300 µg/day for *A. aurantii* (Diaspididae) (Vacas et al. International Journal of Pest Management 2017, 63: 10-17); Diptera - 1.28 mg/day of the pheromone of *Bactrocera oleae* (Rossi) (Tephritidae) (Navarro-Llopis et al. Crop Protection 2011, 30, 913-918).

Therefore, the application of a possible optimal emission flow obtained within the natural semiochemical matrix for the target pests could represent a starting point for addressing a system for attracting and affecting coccoid insects, also supported by the fact that males of these species mainly trust their olfactory stimuli for their reproduction, since they have a very short life that ranges from 10 hours for diaspidids (Tashiro et al. Annals of the Entomological Society of America 1968, 61, 1009-1014) to a maximum of 100 hours for pseudococcids (Chong et al. Environmental Entomology 2008, 37, 323-332; Waterworth et al. Annals of the Entomological Society of America 2011, 104, 249-260). However, it is surprising that when these optimal emission flows have been assayed for pests such as *Aonidiella aurantii, Planococcus ficus, Planococcus citri,* etc., within an interlinked semiochemical matrix formed from a natural semiochemical matrix and an artificial semiochemical matrix consisting of the arrangement of a number of devices with optimal flow emissions, the effective control of the pest has not been achieved.

It is known that specialist olfactory receptor neurons in charge of detecting the sexual pheromones in lepidoptera (either to detect a compound in particular of the pheromone mixture or mixture of a specific proportion), undergo sensory adaptation, i.e. experiment a decrease in sensitivity, due to the influence of a high concentration of the stimulus that modifies its initial response capacity (Baker Cellular and Molecular Life Sciences 1989, 45, 248-262; Todd et al Insect olfaction 1999, pp. 67-96). This would explain the suitability of these species for being combated by means of sexual confusion.

However, the mechanisms that operate in the sexual communication of coccoid species has not been studied in such great detail and could be different to that shown by lepidoptera. Therefore, there could be different mechanisms to the adaptive mechanism shown by lepidoptera, such as those found in olfactory receptor neurons for detecting other semiochemicals, which may be specialized for detecting different concentrations of a given odor (Bruyne et al. Journal of Chemical Ecology 2008, 34, 882-897). Additionally, studies carried out on the sensory ecology of insects suggest that research should not only be carried out in the field of unimodal synergy (comprises the responses to individual chemical stimuli, characterizing them and determining the sensitivity thresholds in controlled situations), but must rather be complemented within a multimodal convergence wherein the response or signal thereof to certain stimuli may be conditioned by others, including those other than semiochemical stimuli (Eichler et al. Nature 2017, 548, 175-182). For example, triatomines are sensitive to carbon dioxide only in the early evening, when they leave their hiding places to feed, and to aggregation pheromones at dawn, when they return to their hiding places (Bodin et al. Journal of Insect Physiology 2008, 54, 1343-1348). Similarly, in the case of insects of the Coccoidea superfamily, upon placing a sexual pheromone emission source within the natural semiochemical matrix, male captures are only observed within a certain daily time slot (Levi-Zada et al. Naturwissenschaften 2014, 101, 671-678). These behaviors can be considered adaptive strategies to different stimuli that optimize risks and allow them to successfully feed or reproduce.

Therefore, the response or behavior of males of the Coccoidea superfamily within the interlinked semiochemical matrix may constitute a complex system with emergent properties (Ritter-Ortiz et al Globalization 2011, rcci.net/globalización), which is conditioned by different stimuli or codes (olfactory response, sensory adaptation, communication mechanism, learning, behavior, longevity of the males, sexual activity of the males, toxicity of different substances, etc.) that may be known or not.

From the foregoing it can be inferred that there are no effective fighting methods based on an attraction and affectation strategy for these pests and, therefore, new biorational and economically viable methods must be developed to effectively combat them.

### Description of the invention

The present invention solves the problems described in the state of the art through the preparation of an artificial semiochemical matrix, within the complex adaptive systems that form the coccoid insect societies or colonies, that makes it possible to optimize the effective flow rate or at least one semiochemical which implies a significant reduction in the use of sexual pheromones per hectare, thereby applying a biorational control of these economically viable pests. Therefore, in a first aspect, the present invention relates to a method for determining the effective flow rate for effectively controlling at least one coccoid insect pest comprising the following steps:
a) preparation of an artificial semiochemical matrix 1, comprising:
   i. *n* diffusers of at least one semiochemical with an initial emission flow-1, substantially constant and known, wherein n is the number of diffusers, *n* being greater than or equal to 1,
   ii. at least one block comprising m diffusers of said at least semiochemical, with a substantially constant emission flow equal to the initial emission flow-1 of stage i), combined with a male insect capturing device, wherein *m* is the number of diffusers, m being greater than or equal to 1,
   iii. at least one block comprising *m* diffusers of said at least semiochemical with a substantially constant emission flow other than the initial emission flow-1 of stages i) and ii), combined with a male insect capturing device,
   wherein *m* is the number of diffusers, m being greater than or equal to 1,
b) obtainment of the effective flow 1, corresponding to the flow of the diffuser of stage iii) whose insect capturing device comprises more captured male insects,
c) preparation of an artificial semiochemical matrix 2 comprising:
   i. *n* diffusers of said at least semiochemical with an emission flow equal to the effective flow 1 obtained in stage b), wherein *n* is the number of diffusers, *n* being greater than or equal to 1,
   ii. at least one block comprising *m* diffusers of said at least semiochemical with an emission flow equal to the effective flow 1 of stage b), combined with a male insect capturing device, wherein m is the number of diffusers, m being greater than or equal to 1,
   iii. at least one block comprising *m* diffusers of said at least semiochemical with a substantially constant emission flow other than the effective flow 1 of stage b), combined with a male insect capturing device, wherein *m* is the number of diffusers, m being greater than or equal to 1,
d) obtainment of the effective flow 2, corresponding to the flow of the diffuser of stage vi) whose insect capturing device comprises more captured male insects,
e) obtainment of the final effective flow, by repeating stage c) *x* times until the diffusers with an emission flow equal to the effective flow *x*, used to prepare the artificial semiochemical matrix *x*, comprise a larger number of captured male insects,
f) obtainment of the effective number of diffusers per unit area, by preparing at least one artificial semiochemical matrix wherein the emission flow is constant and equal to the final effective flow of stage e) and the number of diffusers is variable and different to that used in previous stages, and that enables the effective control of at least one coccoid insect pest
g) obtainment of the effective flow rate using the final effective flow product and the effective number of diffusers per unit area.

In the context of the present invention, **"effective control"** is that whose assessment of the damages produced by at least one pest of the Coccoidea superfamily is less than 5% or equivalent to the damage caused by using authorized pesticide treatments.

In the present invention, **"effective flow"** relates to the emission flow of at least one semiochemical that is released at a substantially constant speed, which acts upon the coccoid species and maximizes the captures of males of at least one coccoid species, within an interlinked semiochemical matrix.

In the present invention, **"effective number of diffusers"** relates to the number of diffusers with effective flow which, evenly distributed per unit area (hectare, m², etc.) form the artificial semiochemical matrix that makes it possible to combat the target pest, obtaining effective control.

The expression **"effective flow rate"** herein is understood to be how the product of the combination of the final effective flow and the effective number of diffusers which, expressed in mg/ha/day, indicates the semiochemical requirements per unit area, in this case hectare, for creating and maintaining the artificial semiochemical matrix through which effective control is obtained over at least one coccoid pest.

In the present invention, the term **"natural semiochemical matrix"** makes reference to the set of volatile molecules involved in the communication between all the species present in the environment of a certain culture, including the set of semiochemicals emitted by the females of at least one coccoid species, to attract or trigger a copulation response in the males. Also, the term **"artificial semiochemical matrix"** makes reference to the set of molecules of at least one semiochemical released into the environment artificially , through the use of an insect affectation device with specific emission point density and a substantially constant semiochemical emission flow.

In the present invention, **"interlinked semiochemical matrix"** makes reference to the set formed by the artificial semiochemical matrix and the natural semiochemical matrix in a given culture.

In a preferred embodiment, the diffusers of a least one semiochemical are homogeneously distributed within a semiochemical matrix. In a particular embodiment, the semiochemical is a sexual pheromone.

In another particular embodiment, the semiochemical is selected from the group consisting of:
a) Carboxylic acids with a number of carbon atoms comprised between 2 and 40 (i.e. a chemical compound containing at least one functional terminal carboxyl group), which may be linear or cyclical, and may optionally be substituted by one or more substitutes, or any salt thereof.
b) Carboxylic esters with a number of carbon atoms comprised between 2 and 40 (i.e. a chemical compound containing at least one functional carboxyl group), which may be linear or cyclical, and may optionally be substituted by one or more substitutes,
c) Hydrocarbons, which may be saturated or unsaturated (i.e. alkenes or alkynes with different degrees of saturation) with a number of carbon atoms comprised between 2 and 40, linear or cyclical, and may also be optionally substituted by one or more substitutes,
d) Ketones (i.e. a chemical compound containing at least one carbonyl functional group) with a number of carbon atoms comprised between 3 and 40, linear or cyclical, which may also be optionally substituted by one or more substitutes, and may optionally include one or more heteroatoms in its skeleton, preferably nitrogen atoms,
e) Quinones of general formula 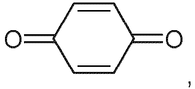 optionally substituted by one or more substitutes,
f) Alcohols (i.e. a chemical compound containing at least one hydroxyl group) with a number of carbon atoms comprised between 3 and 40, which may be primary (i.e. ROH), secondary (i.e. RR'OH) or tertiary (i.e. RR'R"OH), linear or cyclical, and may also be optionally substituted by one or more substitutes,
g) Amines with a number of carbon atoms comprised between 0 (i.e. ammonia) and 40, which may be primary (i.e. RNH₂), secondary (i.e. RR'NH) or tertiary (i.e. RR'R"NH), linear or cyclical, and may also be optionally substituted by one or more substitutes, or any salt thereof,
h) Aldehydes (i.e. a chemical compound containing at least one aldehyde functional group) with a number of carbon atoms comprised between 1 and 40, optionally substituted by one or more substitutes,
i) Epoxides with a number of carbon atoms comprised between 8 and 40, linear or cyclical, which may also be optionally substituted by one or more substitutes,
j) Spiroacetals and dioxide-type compounds, of general formulas 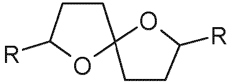 and
   with a number of carbon atoms comprised between 7 and 40,
k) Sulfur compounds, containing at least one sulfur atom in their skeleton, or any salt thereof.
l) Ethers, linear or branched, containing at least one oxygen atom, and may optionally have a cyclical or heterocyclical structure, e.g. ethyl furfuryl ether, or any of its mixtures.

Said one or more substitutes, particularly, R radicals, R' and R" described earlier, are selected independently from the group consisting of optionally substituted alkyl, optionally substituted alkenyl, optionally substituted alkynyl, optionally substituted aryl, optionally substituted heteroaryl, optionally substituted cycloalkyl, optionally substituted heterocycloalkyl or optionally substituted silyl, wherein said one or more optional substitutes in turn are independently selected from the group consisting of alkyl, alkenyl, alkynyl, aryl, heteroaryl, cycloalkyl, heterocycloalkyl, acyl, carboxyl, halide, hydroxyl, ether, nitro, cyano, amide, amine, acylamide, acyloxide, thiol, thioether, sulfoxide, sulfonyl, thioamide, sulfonamide or silyl.

In the context of the present invention, "alkyl group" is understood to be any linear or branched-chain monovalent saturated hydrocarbon that may optionally be cyclical or include cyclical groups which may optionally include one or more heteroatoms in its skeleton selected from nitrogen, oxygen or sulfur, and may also be optionally substituted by one or more substitutes selected from halogen, hydroxyl, alcoxyl, carboxyl, carbonyl, cyano, acyl, alcoxycarbonyl, amine, nitro, mercapto and alkylthio. Examples of alkyl groups include, but not limited to, methyl, ethyl, *n*-propyl, isopropyl, *n*-butyl, isobutyl, *tert*-butyl, *n*-pentyl, cyclopentyl, cyclohexyl or cycloheptyl.

In the present invention, "aryl group" is understood to be an aromatic hydrocarbon that preferably contains a number of carbon atoms comprised between 3 and 12 carbon atoms, more preferably between 6 and 12 carbon atoms, such as for example cyclopropenyl, phenyl, tropyl, indenyl, naphthyl, azulenyl, bifenyl, fluorenyl or anthracenyl. This aryl group may be optionally substituted by one or more substitutes selected from alkyl, haloalkyl, aminoalkyl, dialkylamine, hydroxyl, alcoxide, phenyl, mercapto, halogen, nitro, cyano or alcoxycarbonyl. Optionally, said aryl group may include one or more heteroatoms in its skeleton selected from nitrogen, oxygen or sulfur.

In another preferred embodiment of the present invention, the semiochemical is selected from [(*1S*,*3S*)-2,2-dimethyl-3-(prop-1-en-2-yl)cyclobutyl)]methyl (*R*)-2-methylbutanoate as a specific attractor of the species *Acutaspis albopicta*; (*3*S*,6R*)-3-methyl-6-isopropenyl-9-decen-1-yl acetate and (*3S*,*6S*)-3-methyl-6-isopropenyl-9-decen-1-yl acetate as specific attractors of the species *Aonidiella aurantii*; (3*S*)-(*E*)-6-isopropyl-3,9-dimethyl-5,8-decadienyl acetate as a specific attractor of the species *Aonidilla citrina;* (*1R*,*2S*)-cis-2-isopropenyl-1-(4'-methyl-4'-penten-1'-yl)-cyclobutane ethanol acetate as a specific attractor of the species *Aspidiotus nerii*; (*5R*,*6E*)-5-isopropyl-8-methyl-6,8-nonadien-2-one as a specific attractor of the species *Aulacaspis murrayae;* 3-metyl-3-butenyl 5-methylhexanoate as a specific attractor of the species *Crisicoccus matsumotoi*; (*R*)-(-)-lavandulyl propionate and (*R*)-(-)-lavandulyl acetate as specific attractors of the species *Dysmicoccus grassii*; (*R*)-2-isopropenyl-5-methyl-4-hexenyl *(S)-2-*methylbutanoate and [(*R*)-2,2-dimethyl-3-(1-methylethylidene)-cyclobutyl]methyl (*S*)-2-methylbutanoate as specific attractors of the species *Maconellicoccus hirsutus;* (*1R*,*3R*)-[2,2-dimethyl-3-(2-methylprop-1-enyl)cyclopropyl]methyl (*R*)-2-methylbutanoate as a specific attractor of the species *Phenacoccus madeirensis;* (*1R*,*3R*)-cis-2,2-dimethyl-3-isopropenyl-cyclobutanemethanol acetate as a specific attractor of the species *Planococcus citri*; (*S*)-5-methyl-2-(prop-1-en-2-yl)-hex-4-enyl 3-methyl-2-butanonate as a specific attractor of the species *Planococcus ficus*; 2-isopropylidene-5-methyl-4-hexen-1-yl butyrate as a specific attractor of the species *Planococcus kraunhiae*; (*E*)-2-isopropyl-5-methyl-2,4-hexadienyl acetate as a specific attractor of the species *Planococcus minor, (6R)-*(*Z*)-3,9-dimethyl-6-isopropenyl-3,9-decadienyl propionate as a specific attractor of the species *Pseudaulacaspis pentagona;* (*1R*,*3R*)-2,2-dimethyl-3-(2-methylprop-1-enyl)-cyclopropyl-methyl (R)-2-acetoxy-3-metylbutanoate as a specific attractor of the species *Pseudococcus calceolariae*; 2,6-dimethyl-1,5-heptadiene-3-yl acetate as a specific attractor of the species *Pseudococcus comstocki;* (*1R*,*3R*)-3-isopropenyl-2,2-dimethylcyclobutylmethyl 3-methyl-3-butanoate as a specific attractor of the species *Pseudococcus cryptus*; 2-(1,5,5-trimethylcyclopent-2-enyl)-ethyl acetate as a specific attractor of the species *Pseudococcus longispinus*; (*R*,*R*)-trans-(3,4,5,5-tetramethylcyclo-2-en-1-yl)-methyl 2-methylpropanoate as a specific attractor of the species *Pseudococcus maritimus*; (*1R,2R*,*3S*)-(2,3,4,4-tetramethylcyclopentyl)-methyl acetate as a specific attractor of the species, and (*Z*)-3,7-dimethyl-2,7-octadienyl propionate, 3-methylene-7-methyl-7-octenyl propionate and (*E*)-3,7-dimethyl-2,7-octadienyl propionate as specific attractors of the species *Quadraspidiotus perniciosus* and a combination thereof.

In a particular embodiment, the semiochemical is dispensed dissolved in an inert solvent that makes it possible to achieve an effective flow by dragging of the semiochemical, notwithstanding that the solvent may in turn be a semiochemical.

In another aspect, the present invention relates to a method for effectively controlling at least one coccoid insect pest that comprises the diffusion of at least one semiochemical, in a device that enables the affectation of insects, with an effective flow rate obtained according to the method of the present invention.

In the present invention, "insect affectation device" makes reference to any device having a series of particular characteristics for attracting and/or affecting the males of at least one species of the Coccoidea superfamily, whether color, shape, or any other physical or chemical feature which causes a synergistic effect that increases the attraction of insects of the Coccoidea superfamily. For example, the usual colors for attracting insects are blue, red, white and yellow, being yellow the especially preferred color.

In another aspect, the present invention relates to the use of an effective flow rate comprised between 0.01-250 mg/ha/day of at least one semiochemical for controlling at least one coccoid insect pest.

In a particular embodiment, the at least one semiochemical is a sexual pheromone. More particularly, the at least one semiochemical is selected from [(*1S*,*3S*)-2,2-dimethyl-3-(prop-1-en-2-yl)cyclobutyl)]methyl (*R*)*-2-*methylbutanoate, (*3S*,*6R*)-3-methyl-6-isopropenyl-9-decen-1-yl acetate and (*3S*,*6S*)-3-methyl-6-isopropenyl-9-decen-1-yl acetate, (*3S*)-(*E*)-6-isopropyl-3,9-dimethyl-5,8-decadienyl acetate, (*1R*,*2S*)-cis-2-isopropenyl-1-(4'-methyl-4'-penten-1'-yl)-cyclobutane ethanol acetate, (*5R*,*6E*)-5-isopropyl-8-methyl-6,8-nonadiene-2-one, 3-methyl-3-butenyl 5-methylhexanoate; (*R*)-(-)-lavandulyl propionate, (*R*)-(-)-lavandulyl acetate, (*R*)-2-isopropenyl-5-methyl-4-hexenyl *(S)-*2-methylbutanoate, [(*R*)-2,2-dimethyl-3-(1-methylethylidene)-cyclobutyl]methyl (*S*)-2-methylbutanoate; (*1R,3R*)-[2,2-dimethyl-3-(2-methylprop-1-enyl)cyclopropyl]methyl (*R*)-2-methylbutanoate; (*1R*,*3R*)-cis-2,2-dimethyl-3-isopropenyl-cyclobutanemethanol acetate; (*S*)-5-methyl-2-(prop-1-en-2-yl)-hex-4-enyl 3-methyl-2-butanonate; 2-isopropylidene-5-methyl-4-hexen-1-yl butyrate; (*E*)-2-isopropyl-5-methyl-2,4-hexadienyl acetate; (*6R*)-(*Z*)-3,9-dimethyl-6-isopropenyl-3,9-decadienyl propionate; (*1R*,*3R*)-2,2-dimethyl-3-(2-methylprop-1-enyl)-cyclopropyl-methyl (R)-2-acetoxy-3-methylbutanoate; 2,6-dimethyl-1,5-heptadiene-3-yl acetate; (*1R*,*3R*)-3-isopropenyl-2,2-dimethylcyclobutylmethyl 3-methyl-3-butenoate; 2-(1,5,5-trimethylcyclopent-2-enyl)-ethyl acetate; *(R,R)-*trans-(3,4,5,5-tetramethylcyclopent-2-en-1-yl)-methyl 2-methylpropanoate; (*1R*,*2R*,*3S*)-(2,3,4,4-tetramethylcyclopentyl)-methyl acetate, (*Z*)-3,7-dimethyl-2,7-octadienyl propionate, 3-methylene-7-methyl-7-octenyl propionate, (*E*)-3,7-dimethyl-2,7-octadienyl propionate and a combination thereof.

In a particular embodiment, the at least said semiochemical is combined with at least one toxic substance. In a particular embodiment, the substance can be mixed or impregnated or in an adequate carrier on any type of medium containing it.

In the present invention, toxic substance makes reference to any substance that causes the death of the insect. More particularly, it is a toxic substance for coccoid insects, more particularly, for coccoid insects selected from the group of Diaspididae and Pseudococcidae families. More particularly, the coccoid insects are selected from *Aonidiella aurantii, Aspidiotus nerii, Diaspidiotus perniciosus, Planococcus ficus, Planococcus citri, Pseudococcus viburni, Pseudococcus longispinus, Dysmicoccus grasii, Phenacoccus madeirensis and Pseudococcus calceolariae*

More particularly, the toxic substance is selected from the group consisting of organophosphorated compounds, carbamates, neonicotinoids, diamides, benzoylureas, pyrrols, avermectins, butenolids or any of its mixtures.

More particularly, the toxic substance is selected from the group consisting of: insecticides that act on insect growth and development (e.g. juvenile hormone-mimetic insecticides or chitin biosynthesis inhibitors), insecticides that act on the nervous or muscular system of insects (e.g. acetylcholinesterase inhibitors), insecticides that act on the breathing of insects (e.g. mitochondrial ATP-syntase inhibitors), insecticides that act on the digestive system of insects (e.g. microbial disruptors of insect midgut membranes), insecticides with unknown or uncertain mode of action as non-specific inhibitors (i.e. multi-site inhibitors) or any combination thereof.

In a more particular embodiment, the toxic substance belongs to the family of chemical compounds called pyrethrins and pyrethroids.

In the present invention, "pyrethroid compounds" make reference to synthetically obtained chemical compounds, which have a chemical structure similar to that of pyrethrins, which are organic compounds found naturally in certain flowers, e.g. plants of the Genus *Chrysantemum,* such as *Chrysanthemum cinerariaefolium.* Being the pyrethroid compounds more toxic than the pyrethrins and having relatively short persistence. In the insect they act on the central nervous system by contact and ingestion, exciting the insect at muscular level and finally causing death by muscular contraction.

Illustrative examples of known pyrethroid compounds that can be used as said one or more toxic agents include, but are not limited to,
a) *n*-phenoxybenzyl 3-(2,2-dichlorovinyl)-2,2-dimethylcyclopropanocarboxilate, known as permetrine,
b) (*RS*)-cyano-3-phenoxybenzyl (1 RS)-*cis*,trans-3-(2,2-dichlorovinyl)-2,2-dimethylcyclopropane carboxilate, known as cipermetrine,
c) Cipermetrine isomers, such as:
   i. deltametrine,
   ii. alphacipermetrine,
   iii. betacipermetrine, or
   iv. zetacipermetrine,
d) (*RS*)-a-cyano-3-phenoxybenzyl (1 *RS*,3*RS*)-3-[(*Z*)-2-chloro-3,3,3-trifluoropropenyl]-2,2-dimethylcyclopropanocarboxylate, known as cihalotrine,
e) Cihalotrine isomers such as lambda-cihalotrine,
f) 2-methyl-3-phenylbenzyl(1*RS*)-*cis*-3-(2-chloro-3,3,3-trifluoro1-propenyl)-2,2-dimethylcyclopropanocarboxylate, known as biphentrin,
j) (*S*)-α-cyano-3-phenoxybenzyl (*S*)-2-(4-chlorophenyl)-3-methylbutyrate, known as esfenvalerate,
k) (*RS*)-α-cyano-(3-phenoxyphenyl)methyl N-[2-chloro 4-(trifluoromethyl)phenyl]-dl-valinate, known as fluvalinate, and
l) (*RS*)-3-alyl-2-methyl-4-oxocyclopenten-2-yl (1*R*)-*cis*,*trans*-crysantemate, known as aletrine.

In a particular embodiment, the at least one semiochemical is diffused with an effective flow rate for a period at least greater than the biological cycle of the coccoid insect pest in question. Preferably, prior to the first copulations, preferably for a period greater than one year.

In another particular embodiment, the effective flow rate for each coccoid species is described in table 1.

**TABLE 1**

| **FAMILY** | **SPECIES** | **EFFECTIVE FLOW RATE (mg/ha/day)** |
|---|---|---|
| Diaspididae | *Aonidiella aurantii* | 0.01-150; preferably 0.05-75; more preferably 0.15-20; |
| Diaspididae | *Aspidiotus nerii* | 0.01-150; preferably 0.01-75; more preferably 0.01-45; |
| Diaspididae | *Diaspidiotus perniciosus* | 0.01-150; preferably 0.015-75; more preferably 0.02-45; |
| Pseudococcidae | *Planococcus ficus* | 0.01-150; preferably 0.2-75; more preferably 0.3-45; |
| Pseudococcidae | *Planococcus citri* | 0.01-150; preferably 0.01-75; more preferably 0.25-45; |
| Pseudococcidae | *Pseudococcus viburni* | 0.01-150; preferably 0.05-75; more preferably 0.1-45; |
| Pseudococcidae | *Pseudococcus longispinus* | 0.01-150; preferably 0.05-75; more preferably 0.1-50; |
| Pseudococcidae | *Dysmicoccus grasii* | 0.01-150; preferably 0.02-75; more preferably 0.05-45; |
| Pseudococcidae | *Phenacoccus madeirensis* | 0.01-150; preferably 0.02-75; more preferably 0.03-50; |
| Pseudococcidae | *Pseudococcus calceolariae* | 0.01-150; preferably 0.015-75; more preferably 0.02-50; |

The present invention provides surprisingly favorable results in various aspects, since by means of the method of the present invention a very significant reduction in the amount of semiochemicals released into the atmosphere is achieved on experimentally determining their effective flow rate, prior to determining the effective flow within the interlinked semiochemical matrix. The obtainment of the effective flow within the complex system that forms the interlinked semiochemical matrix with all the variables involved included in the system, have been traditionally and to date been treated independently (e.g. device, formulation of the semiochemical, color, shape, toxic, etc.). The consideration of the interlinked semiochemical matrix as a complex system with emergent properties is what makes it possible to parameterize an effective flow rate to combat pests of the Diaspidiae and/or Pseudococcidae families with specific semiochemicals, biorational treatments that to date were practically unviable for technical and economic reasons due to the high amounts of pheromone per hectare and to the high cost of producing the pheromones of these species. Therefore, the selection of these new variables provides a substantial reduction in costs, due to which these new methods can be consolidated as a real alternative to conventional chemical treatments, since they offer significant socio-economic, environmental and public health benefits on not polluting the fruit or edible parts of the plants for human or animal nutrition.

### Description of the figures

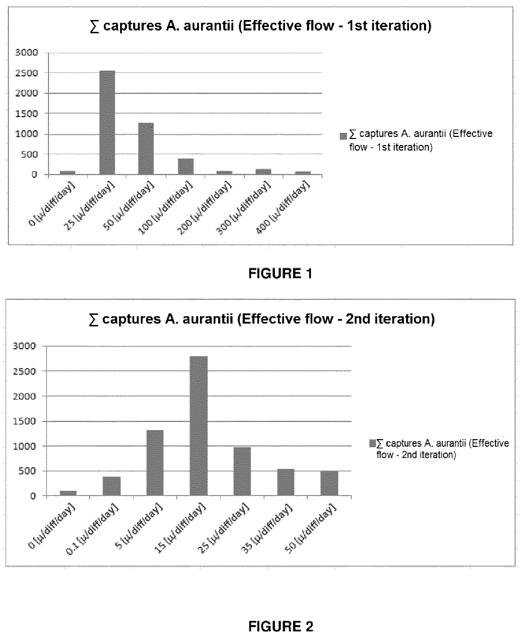

Figure 1 shows the effective flow-1st iteration. The graph of figure 1 represents the total number of *Aonidiella aurantii* males captured within the interlinked semiochemical matrix, in accordance with the emission flow (µg/day) of (*3S*,*6RS*)-3-methyl-6-isopropenyl-9-decen-1-yl acetate released during the first iteration of the assay.
Figure 2 shows the effective flow-2nd iteration. The graph of figure 2 represents the total number of *Aonidiella aurantii* males captured within the interlinked semiochemical matrix, in accordance with the emission flow (µg/day) of (*3S,6RS*)-3-methyl-6-isopropenyl-9-decen-1-yl acetate released during the second iteration of the assay.

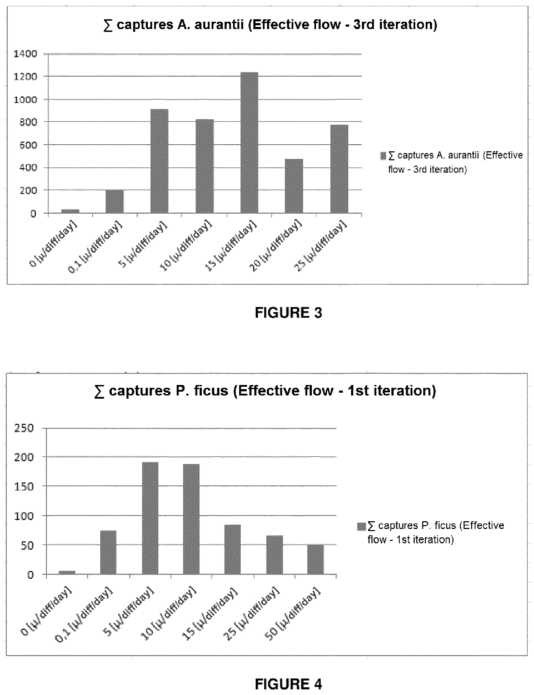

Figure 3 shows the effective flow-3rd iteration. The graph of figure 3 represents the total number of *Aonidiella aurantii* males captured within the interlinked semiochemical matrix, in accordance with the emission flow (µg/day) of (*3S*,*6RS*)-3-methyl-6-isopropenyl-9-decen-1-yl acetate released during the third iteration of the assay.
Figure 4 shows the effective flow-1st iteration. The graph of figure 4 represents the total number of *Planococcus ficus* males captured within the interlinked semiochemical matrix, in accordance with the emission flow (µg/day) of *S-*lavandulyl senecioate released during the first iteration of the assay.

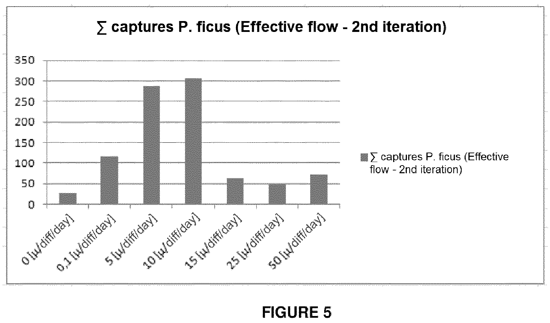

Figure 5 shows the effective flow-2nd iteration. The graph of figure 5 represents the total number of *Planococcus ficus* males captured within the interlinked semiochemical matrix, in accordance with the emission flow (µg/day) of *S-*lavandulyl senecioate released during the second iteration of the assay.

### Examples

### Example 1: Obtainment, selection and use of an artificial semiochemical matrix to combat the coccoid pest A. aurantii, in citrus crops.

### 1.a. Obtainment and selection of the effective flow for attracting A. aurantii males, within the interlinked semiochemical matrix.

Experiments for obtaining an effective flow to combat the diaspidid *Aonidiella aurantii* were carried out on citrus crops located in the province of Huelva in 2015 and 2016.

For these assays, four plots of different varieties of citrus trees with surface areas comprised between 2 and 10 hectares were initially taken.

An artificial semiochemical matrix 1 was generated therein by arranging 500 diffusers/ha, with a substantially constant initial emission flow-1 of 300 µg/diffuser/day (optimal flow according to the state of the art) of (*3S,6RS*)-3-methyl-6-isopropenyl-9-decen-1-yl acetate.

In the interior of these artificial semiochemical matrices, two blocks of seven diffusers with different emission flows were installed in each assay. These blocks were separated by a distance of more than 80 meters therebetween and the diffusers were separated 25 meters intra-block. Each block included:
(a) a glued trap, without any kind of semiochemical emission;
(b) a glued trap, with a diffuser with a substantially constant emission flow of 25 µg/day of (*3S*,*6RS*)-3-methyl-6-isopropenyl-9-decen-1-yl acetate.
(c) a glued trap, with a diffuser with a substantially constant emission flow of 50 µg/day of (*3S*,*6RS*)-3-methyl-6-isopropenyl-9-decen-1-yl acetate.
(d) a glued trap, with a diffuser with a substantially constant emission flow of 100 µg/day of (*3S*,*6RS*)-3-methyl-6-isopropenyl-9-decen-1-yl acetate.
(e) a glued trap with a diffuser with a substantially constant emission flow of 200 µg/day of (*3S*,*6RS*)-3-methyl-6-isopropenyl-9-decen-1-yl acetate.
(f) a glued trap with a diffuser with a substantially constant emission flow of 300 µg/day of (*3S*,*6RS*)-3-methyl-6-isopropenyl-9-decen-1-yl acetate (initial flow-1).
(g) a glued trap with a diffuser with a substantially constant emission flow of 400 µg/day of (*3S*,*6RS*)-3-methyl-6-isopropenyl-9-decen-1-yl acetate.

All the traps were placed in the trees at a height of 1.5 m. The traps used were of the 9.5 x 15 cm white sticky sheet type. Diffusers with a substantially constant emission flow were fixed to the center of the sticky sheet. Replacement of the sheets, intra-block rotation of the traps and reading of the male captures was performed on a weekly basis. Upon completing the first rotation of the traps, it was observed that those whose emission corresponded to the flow of 25 µg/diffuser/day had the highest number of captured males and not the traps with an initial flow-1 of 300 µg/diffuser/day (figure 1).

Subsequently, a new iteration for obtaining the effective flow-2 within the new interlinked matrix was initiated, to which end the previous diffusers were withdrawn and a new artificial semiochemical matrix-2 was generated through the installation of 500 diffusers/ha, with a substantially constant initial emission flow-2 equal to 25 µg/day (effective flow-1) of (3S,6RS)-3-methyl-6-isopropenyl-9-decen-1-yl acetate.

Two blocks of seven diffusers were installed in the interior of this new interlinked semiochemical matrix in each assay. These blocks were separated by a distance of more than 80 meters therebetween and the diffusers were separated 25 meters intra-block. Each block included:
(a) a glued trap, without any kind of semiochemical emission;
(b) a glued trap, with a diffuser with a substantially constant emission flow of 0.1 µg/day of (*3S*,*6RS*)-3-methyl-6-isopropenyl-9-decen-1-yl acetate.
(c) a glued trap, with a diffuser with a substantially constant emission flow of 5 µg/day of (*3S*,*6RS*)-3-methyl-6-isopropenyl-9-decen-1-yl acetate.
(d) a glued trap, with a diffuser with a substantially constant emission flow of 10 µg/day of (*3S*,*6RS*)-3-methyl-6-isopropenyl-9-decen-1-yl acetate.
(e) a glued trap with a diffuser with a substantially constant emission flow of 15 µg/day of (*3S*,*6RS*)-3-methyl-6-isopropenyl-9-decen-1-yl acetate.
(f) a glued trap with a diffuser with a substantially constant emission flow of 20 µg/day of (*3S*,*6RS*)-3-methyl-6-isopropenyl-9-decen-1-yl acetate.
(g) a glued trap with a diffuser with a substantially constant emission flow of 25 µg/day of (*3S*,*6RS*)-3-methyl-6-isopropenyl-9-decen-1-yl acetate.

All the traps were placed in the trees at a height of 1.5 m. The traps used were of the 9.5 x 15 cm white sticky sheet type. The diffusers with a substantially constant emission flow were fixed to the center of the sticky sheet. Replacement of the sheets, intra-block rotation of the traps and reading of the male captures was performed on a weekly basis. Upon completing the rotation of the traps it was observed that those whose emission corresponded to the emission flow of 15 µg/day (effective flow-2) achieved a higher number of captures than those of the diffusers with effective flow-1 (25 µg/day) (figure 2).

Next, a third iteration for obtaining the effective flow-3 within the new interlinked matrix formed by the artificial semiochemical matrix generated through the installation 500 diffusers/ha, with a substantially constant initial emission flow-3 equal to 15 µg/day (effective flow-2) of (*3S*,*6RS*)-3-methyl-6-isopropenyl-9-decen-1-yl acetate.

Two blocks of seven diffusers were installed in the interior of this new interlinked semiochemical matrix in each assay. Those blocks were separated by a distance of more than 80 meters and the diffusers were separated 25 meters intra-block. Each block included:
(a) a glued trap, without any kind of semiochemical emission;
(b) a glued trap, with a diffuser with a substantially constant emission flow of 0.1 µg/day of (*3S*,*6RS*)-3-methyl-6-isopropenyl-9-decen-1-yl acetate.
(c) a glued trap, with a diffuser with a substantially constant emission flow of 3 µg/day of (*3S*,*6RS*)-3-methyl-6-isopropenyl-9-decen-1-yl acetate.
(d) a glued trap, with a diffuser with a substantially constant emission flow of 5 µg/day of (*3S*,*6RS*)-3-methyl-6-isopropenyl-9-decen-1-yl acetate.
(e) a glued trap with a diffuser with a substantially constant emission flow of 10 µg/day of (*3S*,*6RS*)-3-methyl-6-isopropenyl-9-decen-1-yl acetate.
(f) a glued trap with a diffuser with a substantially constant emission flow of 15 µg/day of (*3S*,*6RS*)-3-methyl-6-isopropenyl-9-decen-1-yl acetate.
(g) a glued trap with a diffuser with a substantially constant emission flow of 20 µg/day of (*3S*,*6RS*)-3-methyl-6-isopropenyl-9-decen-1-yl acetate.

All the traps were placed in the trees at a height of 1.5 m. The traps used were of the 9.5 x 15 cm white sticky sheet type. The diffusers with a substantially constant emission flow were fixed to the center of the sticky sheet. Replacement of the sheets, intra-block rotation of the traps and reading of the male captures was performed on a weekly basis. Upon completing the rotation of the traps, it was observed that the captures corresponding to the emission flows of 15 µg/day were slightly higher (figure 3). That is, the final effective flow for combating this pest through the use of an artificial semiochemical matrix is 15 µg/diffuser/day.

### 1.b. Obtainment, selection and use of the effective flow rate to combat A. aurantii, through the creation of an artificial semiochemical matrix.

With the final effective flow value (15 µg/diffuser/day), the assays for ascertaining the effective flow rate resulting from the combinations of the final effective flow of 15 µg/diffuser/day with an effective number of devices of 500 diffusers/ha, 380 diffusers/ha, 250 diffusers/ha, 100 diffusers/ha and 50 diffusers/ha continued in 2017, in addition to the result of chemical controls carried out using the products currently authorized to combat this pest. The results of these assays are shown in table 2.

**TABLE 2**

| **NO.** | **ITEM** | **DATE** | **PLACE** | **CROP** | **SEMIOC. ARTIFICIAL SEMIOC. MATRIX [µg/diffuser/day]** | **EFFECTIVE FLOW [µg/diffuser/day]** | **EFFECTIVE NO. [diff/Ha]** | **EFFECTIVE FLOW RATE [mg/Ha/day]** | **EFFECTIVE CONTROL [%DAMAGE]** |
|---|---|---|---|---|---|---|---|---|---|
| 1 | 1ST ITERATION Effective F. IN INTERLINKED SEMIOC. MATRIX | 2015 | RIO TINTO-HUELVA | ORANGE | 300.00 | 25.00 | 500 | | |
| 2 | 1ST ITERATION Effective F. IN INTERLINKED SEMIOC. MATRIX | 2015 | RIO TINTO-HUELVA | ORANGE | 300.00 | 25.00 | 500 | | |
| 3 | 1ST ITERATION Effective F. IN INTERLINKED SEMIOC. MATRIX | 2015 | RIO TINTO-HUELVA | ORANGE | 300.00 | 25.00 | 500 | | |
| 4 | 1ST ITERATION Effective F. IN INTERLINKED SEMIOC. MATRIX | 2015 | RIO TINTO-HUELVA | ORANGE | 300.00 | 25.00 | 500 | | |
| 5 | EFFECTIVE F.1 + 2ND ITERATION Effective F. IN INTERLINKED SEMIOC. MATRIX | 2016 | NERVA HUELVA | ORANGE | 25.00 | 15.00 | 500 | 12.50 | 7,30% |
| 6 | EFFECTIVE F.1 + 2ND ITERATION Effective F. IN INTERLINKED SEMIOC. MATRIX | 2016 | NERVA HUELVA | ORANGE | 25.00 | 15.00 | 500 | 12.50 | 7,50% |
| 7 | EFFECTIVE F.1 + 2ND ITERATION Effective F. IN INTERLINKED SEMIOC. MATRIX | 2016 | NERVA HUELVA | ORANGE | 25.00 | 15.00 | 500 | 12.50 | 8,00% |
| 5 | CHEMICAL STANDARD (APPLICATION OF PARAFFIN OIL) | 2016 | NERVA HUELVA | ORANGE | | | | | 6,80% |
| 9 | EFFECTIVE F.-2. + 3RD ITERATION Effective F. IN INTERLINKED SEMIOC. MATRIX | 2016 | EL CAMPILLO-HUELVA | ORANGE | 15.00 | 15.00 | 380 | 5.70 | 1,70% |
| 10 | EFFECTIVE F.-2. + 3RD ITERATION Effective F. IN INTERLINKED SEMIOC. MATRIX | 2016 | EL CAMPILLO-HUELVA | ORANGE | 15.00 | 15.00 | 380 | 5.70 | 0,70% |
| 11 | EFFECTIVE F.-2. + 3RD ITERATION Effective F. IN INTERLINKED SEMIOC. MATRIX | 2016 | EL CAMPILLO-HUELVA | ORANGE | 15.00 | 15.00 | 380 | 5.70 | 0,60% |
| 12 | CHEMICAL STANDARD (APPLICATION OF PARAFFIN OIL) | 2016 | EL CAMPILLO-HUELVA | ORANGE | | | | | 3,50% |
| 13 | EFFECTIVE FLOW INTERLINKED SEMIOCHEMICAL MATRIX | 2017 | PICASENT-VALENCIA | MANDARINE | 15.00 | 15.00 | 250 | 3.75 | 1,90% |
| 14 | EFFECTIVE FLOW INTERLINKED SEMIOCHEMICAL MATRIX | 2017 | MONSERRAT-VALENCIA | MANDARINE | 15.00 | 15.00 | 250 | 3.75 | 4,20% |
| 15 | EFFECTIVE FLOW INTERLINKED SEMIOCHEMICAL MATRIX | 2017 | MONSERRAT-VALENCIA | ORANGE | 15.00 | 15.00 | 250 | 3.75 | 3.00% |
| 16 | CHEMICAL STANDARD APPLICATION OF MOVENTO 150 O-TEQ | 2017 | MONSERRAT-VALENCIA | ORANGE | | | | | 1.80% |
| 17 | EFFECTIVE FLOW INTERLINKED SEMIOCHEMICAL MATRIX | 2017 | SERRA-VALENCIA | ORANGE | 15.00 | 15.00 | 100 | 1.50 | 5.10% |
| 18 | EFFECTIVE FLOW INTERLINKED SEMIOCHEMICAL MATRIX | 2017 | SERRA-VALENCIA | ORANGE | 15.00 | 15.00 | 100 | 1.50 | 3.80% |
| 19 | EFFECTIVE FLOW INTERLINKED SEMIOCHEMICAL MATRIX | 2017 | SERRA-VALENCIA | ORANGE | 15.00 | 15.00 | 50 | 0.75 | 3.30% |
| 20 | EFFECTIVE FLOW INTERLINKED SEMIOCHEMICAL MATRIX | 2017 | SERRA-VALENCIA | ORANGE | 15.00 | 15.00 | 50 | 0.75 | 4.00% |
| 21 | CHEMICAL STANDARD APPLICATION OF MOVENTO 150 O-TEQ | 2017 | SERRA-VALENCIA | ORANGE | | | | | 2.10% |

The effectiveness of the treatments was evaluated in accordance with the percentage of damaged fruit by means of sampling prior to picking the fruit. In order to determine said percentage, the number of shields of *A. aurantii* females per fruit was counted using the following protocol: 20 trees were selected per hectare and 10 fruits were taken from each tree: 8 from the exterior (from all the orientations and randomly) and 2 from the interior (randomly). A fruit with more than 10 shields was considered damaged. In the case of the treatment based on chemical control, a surface area equivalent to the other treatments was evaluated.

These data demonstrated the savings in sexual pheromone for the California red scale, *A. aurantii.* The flow rate corresponding to the optimal flow according to the state of the art would correspond to 150 mg per hectare and day (300 µg/day (Vacas et al. International Journal of Pest Management 2017, 63, 10-17) at 500 emission points per hectare), while with the method described in this invention, the effective flow rate value determined within the interlinked semiochemical matrix after successive iterations reached values of 2.5 mg per hectare and day (5 µg/day at 500 emission points per hectare), which implies a decrease in the pheromone flow rate of 98%, obtaining a crop damage level comparable to those obtained with the application of a conventional chemical treatment (paraffin oil). Comparatively, the control of *A. aurantii* using the sexual confusion technique uses approximately 35 g/ha/year of (*3S*,*6RS*)-3-methyl-6-isopropenyl-9-decen-1-yl acetate, while it would be advisable, but not limiting, to use 0.7 g/ha/year of the same semiochemical to combat the pest when applying the parameters proposed in this patent application.

### Example 2: Obtainment, selection and use of an artificial semiochemical matrix to combat the Planococcus ficus coccoid pest in table grape crops. 2.a. Obtainment and selection of the effective flow for attracting P. ficus males, within the interlinked semiochemical matrix.

The response of the males of the species *P. ficus,* at different emission flows of senecioate S-lavandulyl, was evaluated in various field tests carried out on table grape crops located in the Municipal District of Alhama de Murcia and Totana, both municipalities in the Region of Murcia in 2015, 2016 and 2017.

For these assays, four plots of different varieties of table grapes with surface areas comprised between 1 and 4 hectares were initially taken.

An artificial semiochemical matrix-1 was generated therein through the installation of 1,000 diffusers/ha, with a substantially constant emission flow of 300 µg/day of S-lavandulyl senecioate (initial flow-1). The choice of this initial emission flow is based on the average emission of commercial diffusers for controlling this pest.

In the interior of these artificial semiochemical matrices, two blocks of six diffusers with different emission flows were installed in each assay. These blocks were separated by a distance of more than 80 meters therebetween and the diffusers were separated 25 meters intra-block. Each block included:
(a) a glued trap, without any kind of semiochemical emission.
(b) a glued trap, with a substantially constant emission flow of 10 µg/day of *S-*lavandulyl senecioate.
(c) a glued trap, with a diffuser with a substantially constant emission flow of 50 µg/day of *S*-lavandulyl senecioate.
(d) a glued trap, with a diffuser with a substantially constant emission flow of 100 µg/day of *S*-lavandulyl senecioate.
(e) a glued trap with a diffuser with a substantially constant emission flow of 200 µg/day of S-lavandulyl senecioate.
(f) a glued trap with a diffuser with a substantially constant emission flow of 300 µg/day of S-lavandulyl senecioate (initial flow-1).

All the traps were placed in the trees at a height of 2 m. The traps used were of the 9.5 x 15 cm white sticky sheet type. Diffusers with a substantially constant emission flow were fixed to the center of the sticky sheet. Replacement of the sheets, intra-block rotation of the traps and reading of the male captures was performed on a weekly basis. Upon completing the first rotation of the traps it was observed that those whose emission corresponded to the emission flow of 10 µg/day (effective flow-1) achieved the highest number of captures within the interlinked semiochemical matrix (figure 4).

Next, a new iteration for obtaining the effective flow-2 within the new interlinked matrix was initiated, to which end the previous diffusers were withdrawn and a new artificial semiochemical matrix-2 was generated through the installation of 1,000 diffusers/ha, with a substantially constant emission flow of 10 µg/day (effective flow-1) of S-lavandulyl senecioate.

Two blocks of six diffusers were installed in the interior of this new interlinked semiochemical matrix in each assay. These blocks were separated by a distance of more than 80 meters therebetween and the diffusers were separated 25 meters intra-block. Each block included:
(a) a glued trap, without any kind of semiochemical emission;
(b) a glued trap, with a diffuser with a substantially constant emission flow of 0.1 µg/day of *S*-lavandulyl senecioate.
(c) a glued trap, with a diffuser with a substantially constant emission flow of 5 µg/day of *S*-lavandulyl senecioate.
(d) a glued trap, with a diffuser with a substantially constant emission flow of 10 µg/day of *S*-lavandulyl senecioate.
(e) a glued trap with a diffuser with a substantially constant emission flow of 15 µg/day of S-lavandulyl senecioate.
(f) a glued trap with a diffuser with a substantially constant emission flow of 25 µg/day of S-lavandulyl senecioate.
(g) a glued trap with a diffuser with a substantially constant emission flow of 50 µg/day of S-lavandulyl senecioate.

All the traps were placed in the trees at a height of 2 m. The traps used were of the 9.5 x 15 cm white sticky sheet type. The diffusers with a substantially constant emission flow were fixed to the center of the sticky sheet. Replacement of the sheets, intra-block rotation of the traps and reading of the male captures was performed on a weekly basis. Upon completing the first rotation of the traps it was observed that those whose emission corresponded to the flows of 5 µg/day and 10 µg/day had the highest number of male captures (figure 5).

That is, the final effective flow for combating this pest through the use of an artificial semiochemical matrix is comprised between 5 µg/diffuser/day and 10 µg/diffuser/day.

### 2.b. Obtainment, selection and use of the effective flow rate for combating P. ficus, through the creation of an artificial semiochemical matrix.

With the final definitive effective flow value (5-10 µg/diffuser/day), the assays for ascertaining the effective flow rate resulting from the combinations of the final effective flow with an effective number of devices of 1,000 diffusers/ha, 500 diffusers/ha, 250 diffusers/ha and 100 diffusers/ha continued in 2016 and 2017. The results of these assays are shown in table 3.

**TABLE 3**

| **NO.** | **ITEM** | **DATE** | **PLACE** | **CROP** | **SEMIOC. ARTIFICIAL SEMIOC. MATRIX [µg/diffuser/day]** | **EFFECTIVE FLOW [µg/diffuser/day]** | **EFFECTIVE NO. [diff/Ha]** | **EFFECTIVE FLOW RATE [mg/Ha/day]** | **EFFECTIVE CONTROL [%DAMAGE]** |
|---|---|---|---|---|---|---|---|---|---|
| 1 | 1ST ITERATION Effective F. IN INTERLINKED SEMIOC. MATRIX | 2015 | ALHAMA DE MURCIA-MURCIA | TABLE GRAPES | 300.00 | 10.00 | 1,000 | | |
| 2 | 1ST ITERATION Effective F. IN INTERLINKED SEMIOC. MATRIX | 2015 | ALHAMA DE MURCIA-MURCIA | TABLE GRAPES | 300.00 | 10.00 | 1,000 | | |
| 3 | 1ST ITERATION Effective F. IN INTERLINKED SEMIOC. MATRIX | 2015 | ALHAMA DE MURCIA-MURCIA | TABLE GRAPES | 300.00 | 10.00 | 1,000 | | |
| 4 | 1ST ITERATION Effective F. IN INTERLINKED SEMIOC. MATRIX | 2015 | ALHAMA DE MURCIA-MURCIA | TABLE GRAPES | 300.00 | 10.00 | 1,000 | | |
| 5 | EFFECTIVE F.-1. + 2ND ITERATION Effective F. IN INTERLINKED SEMIOC. MATRIX | 2016 | ALHAMA DE MURCIA-MURCIA | TABLE GRAPES | 10.00 | 10.00 | 1,000 | 10.00 | 1.20% |
| 6 | EFFECTIVE F.-1. + 2ND ITERATION Effective F. IN INTERLINKED SEMIOC. MATRIX | 2016 | ALHAMA DE MURCIA-MURCIA | TABLE GRAPES | 10.00 | 10.00 | 1,000 | 10.00 | 0.90% |
| 7 | EFFECTIVE F.-1. + 2ND ITERATION Effective F. IN INTERLINKED SEMIOC. MATRIX | 2016 | ALHAMA DE MURCIA-MURCIA | TABLE GRAPES | 10.00 | 10.00 | 1,000 | 10.00 | 3.70% |
| 8 | EFFECTIVE F.-2. + 3RD ITERATION Effective F. IN INTERLINKED SEMIOC. MATRIX | 2016 | ALHAMA DE MURCIA-MURCIA | TABLE GRAPES | 10.00 | 10.00 | 500 | 5.00 | 0% |
| 9 | EFFECTIVE F.-2. + 3RD ITERATION Effective F. IN INTERLINKED SEMIOC. MATRIX | 2017 | ALHAMA DE MURCIA-MURCIA | TABLE GRAPES | 5.00 | 5.00 | 1,000 | 5.00 | 2.30% |
| 10 | EFFECTIVE F.-2. + 3RD ITERATION Effective F. IN INTERLINKED SEMIOC. MATRIX | 2017 | ALHAMA DE MURCIA-MURCIA | TABLE GRAPES | 5.00 | 5.00 | 1,000 | 5.00 | 0.00% |
| 11 | EFFECTIVE FLOW INTERLINKED SEMIOCHEMICAL MATRIX | 2017 | ALHAMA DE MURCIA-MURCIA | TABLE GRAPES | 5.00 | 5.00 | 1,000 | 5.00 | 0.00% |
| 12 | EFFECTIVE FLOW INTERLINKED SEMIOCHEMICAL MATRIX | 2017 | ALHAMA DE MURCIA-MURCIA | TABLE GRAPES | 5.00 | 5.00 | 1,000 | 5.00 | 0.00% |
| 13 | EFFECTIVE FLOW INTERLINKED SEMIOCHEMICAL MATRIX | 2017 | ALHAMA DE MURCIA-MURCIA | TABLE GRAPES | 5.00 | 5.00 | 500 | 2.50 | 0.80% |
| 14 | EFFECTIVE FLOW INTERLINKED SEMIOCHEMICAL MATRIX | 2017 | ALHAMA DE MURCIA-MURCIA | TABLE GRAPES | 5.00 | 5.00 | 500 | 2.50 | 1.40% |
| 15 | EFFECTIVE FLOW INTERLINKED SEMIOCHEMICAL MATRIX | 2017 | TOTANA-MURCIA | TABLE GRAPES | 10.00 | 10 | 250 | 2.50 | 2.90% |
| 16 | EFFECTIVE FLOW INTERLINKED SEMIOCHEMICAL MATRIX | 2017 | TOTANA-MURCIA | TABLE GRAPES | 5.00 | 5 | 250 | 1.25 | 1.80% |
| 17 | EFFECTIVE FLOW INTERLINKED SEMIOCHEMICAL MATRIX | 2017 | TOTANA-MURCIA | TABLE GRAPES | 10.00 | 10 | 100 | 1.00 | 3.00% |
| 18 | EFFECTIVE FLOW INTERLINKED SEMIOCHEMICAL MATRIX | 2017 | TOTANA-MURCIA | TABLE GRAPES | 5.00 | 5 | 100 | 0.50 | 4.50% |

Since the plots where the assays were carried out were used for organic or environmentally friendly farming, it was not possible to establish a chemical control for comparing the results of the effective control of *Planococcus ficus.* The effectiveness of the treatments was assessed in accordance with the percentage of bunches with presence of *Planococcus ficus,* molasses or fumigines by sampling prior to picking the grapes. In order to determine said percentage, 20 vines per hectare were taken randomly and 20 bunches were inspected in each, of which the 10 bunches closest to the center of the vine and the 10 bunches farthest from the vine were chosen, covering the entire vine. Both bunches in contact with primary branches were taken and isolated without touching any other branch. A total of 800 bunches per hectare. The valuation of the bunches was estimated in accordance with the values shown in table 4:

**TABLE 4**

| **DAMAGE LEVEL** | **ITEM** |
|---|---|
| 1 | Absence of larvae, adults, molasses and fumigines. |
| 2 | 0-5% of bunches occupied by larvae, adults, molasses and fumigines. |
| 3 | 5-25% of bunches occupied by larvae, adults, molasses and fumigines. |
| 4 | 25-50% of bunches occupied by larvae, adults, molasses and fumigines. |
| 5 | 50-75% of bunches occupied by larvae, adults, molasses and fumigines. |
| 6 | More than 75% of bunches occupied by larvae, adults, molasses and fumigines. |

As regards the vine mealybug, *P. ficus,* approximately 46.5 g/ha/year of S-lavandulyl senecioate are currently used to control the pest using the sexual confusion technique, while in the case of applying the parameters using the method described in this present application a reduction to 4.4 g/ha/year of the same semiochemical for combating the pest would be advisable, but not limiting. Therefore, the savings in pheromone is substantial, being of capital importance in the case of pheromones with complex chemical structures, as pointed out in the state of the art of the present invention.

The examples demonstrated that the males of these species were effectively drawn to the source of the emission flow, triggering a search in this area that in many cases entailed their exhaustion and death. This effect was more acute in the diaspidids and more particularly in the species *Aonidiella aurantii, Aspidiotus nerii and Diaspidiotus perniciosus,* for whose males their lifetime does not exceed 20 hours, rendering the use of a toxic formulation unnecessary.

Surprisingly, and despite the described background, the examples demonstrate that with the method of the present invention, in the coccoid species, upon achieving the effective flow within the interlinked semiochemical matrix, it is significantly lower than that determined within the natural semiochemical matrix using the methods described in the state of the art (optimal flow), but even more surprising is the finding of different combinations in the formation of the artificial semiochemical matrix that make it possible to optimally control the pest. This reduction in the semiochemical flow that is observed between the optimal flow and the effective flow, together with the reduction in the effective number of devices, constitutes a unique technical and economic combination (effective flow rate) that significantly lowers treatment costs, which enables this technique to be economically competitive compared to other chemical and biological control methods.

The application of the method of the present invention in other species is the Coccoidea superfamily such as *Planococcus citri, Aspidiotus nerii, Diaspidiotus perniciosus, Pseudococcus viburni, Pseudococcus longispinus, Phenacoccus madeirensis,* Dysmicoccus grasii, equally led to effective flow rate values that enabled a substantial reduction in costs both in the use of the pheromone and in the number of devices (data not shown).

## Claims

1. A method for determining the effective flow rate for effectively controlling at least one coccoid insect pest comprising the following stages:
a) preparation of an artificial semiochemical matrix 1, comprising:
i. *n* diffusers of at least one semiochemical with an initial emission flow-1, constant and known, wherein *n* is the number of diffusers, *n* being greater than or equal to 1,
ii. at least one block comprising *m* diffusers of said at least semiochemical with a constant emission flow equal to the initial emission flow-1 of stage i), combined with a male insect capturing device, wherein *m* is the number of diffusers, m being greater than or equal to 1,
iii. at least one block comprising *m* diffusers of said at least semiochemical with a constant emission flow other than the initial emission flow-1 of stages i) and ii), combined with a male insect capturing device, wherein *m* is the number of diffusers, m being greater than or equal to 1,
b) obtainment of the effective flow 1, corresponding to the flow of the diffuser of stage iii) whose insect capturing device comprises more captured male insects,
c) preparation of an artificial semiochemical matrix 2 comprising:
iv. *n* diffusers of said at least semiochemical with an emission flow equal to the effective flow 1 obtained in stage b), wherein n is the number of diffusers, n being greater than or equal to 1,
v. at least one block comprising *m* diffusers of said at least semiochemical with an emission flow equal to the effective flow 1 of stage b), combined with a male insect capturing device, wherein *m* is the number of diffusers, m being greater than or equal to 1,
vi. at least one block comprising m diffusers of said at least semiochemical with a constant emission flow other than the effective flow 1 of stage b), combined with a male insect capturing device, wherein *m* is the number of diffusers, m being greater than or equal to 1,
d) obtainment of the effective flow 2, corresponding to the flow of the diffuser of stage vi) whose insect capturing device comprises more captured male insects,
e) obtainment of the final effective flow, by repeating stage c) *x* times until the diffusers with an emission flow equal to the effective flow *x*, used to prepare the artificial semiochemical matrix *x*, comprise a larger number of captured male insects,
f) obtainment of the effective number of diffusers per unit area, by preparing at least one artificial semiochemical matrix wherein the emission flow is constant and equal to the final effective flow of stage e) and the number of diffusers is variable and different to that used in previous stages, and that enables the effective control of at least one coccoid insect pest
g) obtainment of the effective flow rate using the final effective flow product and the effective number of diffusers per unit area.

2. The method for determining the effective flow rate for effectively controlling at least one coccoid insect pest, according to claim 1, wherein the at least one semiochemical is a sexual pheromone.

3. The method for determining the effective flow rate for effectively controlling at least one coccoid insect pest, according to any of claims 1 to 2, wherein the at least one semiochemical is selected from [(*1S*,*3S*)-2,2-dimethyl-3-(prop-1-en-2-yl)cyclobutyl*)*]methyl (*R*)-2-methylbutanoate, (*3S*,*6R*)-3-methyl-6-isopropenyl-9-decen-1-yl acetate and (*3S*,*6S*)-3-methyl-6-isopropenyl-9-decen-1-yl acetate, (*3S*)-(*E*)-6-isopropyl-3,9-dimethyl-5,8-decadienyl acetate, (*1R*,*2S*)-cis-2-isopropenyl-1-(4'-methyl-4'-penten-1'-yl)-cyclobutane ethanol acetate, (*5R,6E*)-5-isopropyl-8-methyl-6,8-nonadiene-2-one, 3-methyl-3-butenyl 5-methylhexanoate; (*R*)-(-)-lavandulyl propionate, (*R*)-(-)-lavandulyl acetate, (R)-2-isopropenyl-5-methyl-4-hexenyl (*S*)-2-methylbutanoate, [(*R*)-2,2-dimethyl-3-(1-methylethylidene)-cyclobutyl]methyl (*S*)-2-methylbutanoate; *(1R,3R*)-[2,2-dimethyl-3-(2-methylprop-1-enyl)cyclopropyl]methyl (*R*)-2-methylbutanoate; (*1R*,*3R*)-cis-2,2-dimethyl-3-isopropenyl-cyclobutanemethanol acetate; (*S*)-5-methyl-2-(prop-1-en-2-yl)-hex-4-enyl 3-methyl-2-butanonate; 2-isopropylidene-5-methyl-4-hexen-1-yl butyrate; (*E*)-2-isopropyl-5-methyl-2,4-hexadienyl acetate; (*6R*)-(*Z*)-3,9-dimethyl-6-isopropenyl-3,9-decadienyl propionate; (*1R*,*3R*)-2,2-dimethyl-3-(2-methylprop-1-enyl)-cyclopropyl-methyl (R)-2-acetoxy-3-methylbutanoate; 2,6-dimethyl-1,5-heptadiene-3-yl acetate; *(1R,3R)*-3-isopropenyl-2,2-dimethylcyclobutylmethyl 3-methyl-3-butenoate; 2-(1,5,5-trimethylcyclopent-2-enyl)-ethyl acetate; (*R*,*R*)-trans-(3,4,5,5-tetramethylcyclopent-2-en-1-yl)-methyl 2-methylpropanoate; *(1R,2R,3S)-*(2,3,4,4-tetramethylcyclopentyl)-methyl acetate, (*Z*)-3,7-dimethyl-2,7-octadienyl propionate, 3-methylene-7-methyl-7-octenyl propionate, (*E*)-3,7-dimethyl-2,7-octadienyl propionate and a combination thereof.

4. A method for effectively controlling at least one coccoid insect pest comprising the diffusion of at least one semiochemical in a device that enables the affectation of insects, having an effective flow rate obtained by means of a method, according to any of claims 1 to 3.

5. A use of an effective flow rate of at least one semiochemical combined with at least one toxic substance for controlling at least one coccoid insect pest, **characterized in that** the effective flow rate is comprised between 0.01-75 mg/ha/day;
wherein the semiochemical is selected from [(*1S*,*3S*)-2,2-dimethyl-3-(prop-1-en-2-yl)cyclobutyl)]methyl (*R*)-2-methylbutanoate, (*3S*,*6R*)-3-methyl-6-isopropenyl-9-decen-1-yl acetate and (*3S*,*6S*)-3-methyl-6-isopropenyl-9-decen-1-yl acetate, (*3S*)-(*E*)-6-isopropyl-3,9-dimethyl-5,8-decadienyl acetate, (*1R*,*2S*)-cis-2-isopropenyl-1-(4'-methyl-4'-penten-1'-yl)-cyclobutane ethanol acetate, (*5R*,*6E*)-5-isopropyl-8-methyl-6,8-nonadiene-2-one, 3-methyl-3-butenyl 5-methylhexanoate; (*R*)-(-)-lavandulyl propionate, (*R*)-(-)-lavandulyl acetate, (*R*)-2-isopropenyl-5-methyl-4-hexenyl (*S*)-2-methylbutanoate, [(*R*)-2,2-dimethyl-3-(1-methylethylidene)-cyclobutyl]methyl (*S*)-2-methylbutanoate; (*1R*,*3R*)-[2,2-dimethyl-3-(2-methylprop-1-enyl)cyclopropyl]methyl (*R*)-2-methylbutanoate; (*1R*,*3R*)-cis-2,2-dimethyl-3-isopropenyl-cyclobutanemethanol acetate; (*S*)-5-methyl-2-(prop-1-en-2-yl)-hex-4-enyl 3-methyl-2-butanonate; 2-isopropylidene-5-methyl-4-hexen-1-yl butyrate; (*E*)-2-isopropyl-5-methyl-2,4-hexadienyl acetate; (*6R*)-(*Z*)-3,9-dimethyl-6-isopropenyl-3,9-decadienyl propionate; (*1R,3R*)-2,2-dimethyl-3-(2-methylprop-1-enyl)-cyclopropyl-methyl (R)-2-acetoxy-3-methylbutanoate; 2,6-dimethyl-1,5-heptadiene-3-yl acetate; (*1R,3R*)-3-isopropenyl-2,2-dimethylcyclobutylmethyl 3-methyl-3-butenoate; 2-(1,5,5-trimethylcyclopent-2-enyl)-ethyl acetate; (*R*,*R*)-trans-(3,4,5,5-tetramethylcyclopent-2-en-1-yl)-methyl 2-methylpropanoate; (*1R,2R,3S*)-(2,3,4,4-tetramethylcyclopentyl)-methyl acetate, (Z)-3,7-dimethyl-2,7-octadienyl propionate, 3-methylene-7-methyl-7-octenyl propionate, (*E*)-3,7-dimethyl-2,7-octadienyl propionate and a combination thereof;
and wherein the effective flow rate is suitable for attracting and affecting coccoid insects;

6. The use of an effective flow rate, according to any of claim 5, wherein the semiochemical is a sexual pheromone.

7. The use of an effective flow rate of at least one semiochemical, according to any of claims 5 to 6, wherein the coccoid insects are selected from the families Diaspididae and Pseudococcidae.

8. The use of an effective flow rate, according to any of claims 5 to 7, wherein the coccoid insects are selected from the species *Aonidiella aurantii, Aspidiotus nerii, Diaspidiotus perniciosus, Planococcus ficus, Planococcus citri, Pseudococcus viburni, Pseudococcus longispinus, Dysmicoccus grasii, Phenacoccus madeirensis and Pseudococcus calceolariae.*

9. The use of an effective flow rate, according to claim 5, wherein the at least one semiochemical substance is mixed or impregnated in an adequate carrier on any type of medium containing it.

10. The use of an effective flow rate, according to claims 5, wherein the semiochemical is in a device having a series of characteristics for attracting and and/or affecting the males of at least one species of the Coccoidea.

## Patentansprüche

1. Verfahren zum Bestimmen der effektiven Flussrate zur wirksamen Bekämpfung mindestens eines Schildlausschädlings, umfassend die folgenden Stufen:
a) Herstellung einer künstlichen Semiochemikalien-Matrix 1, umfassend:
i. *n* Diffusoren mindestens einer Semiochemikalie mit einem anfänglichen Emissionsfluss -1, der konstant und bekannt ist, wobei *n* die Anzahl der Diffusoren ist und n größer oder gleich 1 ist,
ii. mindestens einen Block, der *m* Diffusoren der mindestens einen Semiochemikalie mit einem konstanten Emissionsfluss umfasst, der dem anfänglichen Emissionsfluss -1 von Stufe i) entspricht, kombiniert mit einer Vorrichtung zum Fangen männlicher Insekten, wobei *m* die Anzahl der Diffusoren ist und *m* größer oder gleich 1 ist,
iii. mindestens einen Block, der *m* Diffusoren der mindestens einen Semiochemikalie mit einem konstanten Emissionsfluss umfasst, der sich vom anfänglichen Emissionsfluss -1 der Stufen i) und ii) unterscheidet, kombiniert mit einer Vorrichtung zum Fangen männlicher Insekten, wobei *m* die Anzahl der Diffusoren ist und *m* größer oder gleich 1 ist,
b) Erreichen des effektiven Flusses 1, der dem Fluss des Diffusors von Stufe iii) entspricht, deren Insektenfangvorrichtung mehr gefangene männliche Insekten umfasst,
c) Herstellung einer künstlichen Semiochemikalien-Matrix 2, umfassend:
iv. *n* Diffusoren der mindestens einen Semiochemikalie mit einem Emissionsfluss, der dem in Stufe b) erhaltenen effektiven Fluss 1 entspricht, wobei *n* die Anzahl der Diffusoren ist und *n* größer oder gleich 1 ist,
v. mindestens einen Block, der *m* Diffusoren der mindestens einen Semiochemikalie umfasst, mit einem Emissionsfluss, der dem effektiven Fluss 1 von Stufe b) entspricht, kombiniert mit einer Vorrichtung zum Fangen männlicher Insekten, wobei *m* die Anzahl der Diffusoren ist und *m* größer oder gleich 1 ist,
vi. mindestens einen Block, der *m* Diffusoren der mindestens einen Semiochemikalie umfasst, mit einem konstanten Emissionsfluss, der sich vom effektiven Fluss 1 aus Schritt b) unterscheidet, kombiniert mit einer Vorrichtung zum Fangen männlicher Insekten, wobei *m* die Anzahl der Diffusoren ist und *m* größer oder gleich 1 ist,
d) Erreichen des effektiven Flusses 2, der dem Fluss des Diffusors von Stufe vi) entspricht, deren Insektenfangvorrichtung mehr gefangene männliche Insekten umfasst,
e) Erreichen des endgültigen effektiven Flusses durch *x*-maliges Wiederholen von Stufe c), bis die Diffusoren mit einem Emissionsfluss gleich dem effektiven Fluss *x*, die zur Herstellung der künstlichen Semiochemikalien-Matrix *x* verwendet werden, eine größere Anzahl gefangener männlicher Insekten umfassen,
f) Erreichen der effektiven Anzahl von Diffusoren pro Flächeneinheit durch die Herstellung mindestens einer künstlichen Semiochemikalien-Matrix, wobei der Emissionsfluss konstant und gleich dem endgültigen effektiven Fluss von Stufe e) ist und die Anzahl der Diffusoren variabel und unterschiedlich zu der in den vorherigen Stufen verwendeten ist, und die die wirksame Bekämpfung mindestens eines Schildlausschädlings ermöglicht,
g) Erreichen der effektiven Flussrate unter Verwendung des endgültigen effektiven Flussprodukts und der effektiven Anzahl von Diffusoren pro Flächeneinheit.

2. Verfahren zum Bestimmen der effektiven Flussrate zur wirksamen Bekämpfung von mindestens einem Schildlausschädlings nach Anspruch 1, wobei die mindestens eine Semiochemikalie ein Sexualpheromon ist.

3. Verfahren zum Bestimmen der effektiven Flussrate zur wirksamen Bekämpfung mindestens eines Schildlausschädlings nach einem der Ansprüche 1 bis 2, wobei die mindestens eine Semiochemikalie ausgewählt ist aus [(*1S*,*3S*)-2,2-Dimethyl-3-(prop-1-en-2-yl)cyclobutyl)]methyl-(*R*)-2-methylbutanoat, (*3S*,*6R*)-3-Methyl-6-isopropenyl-9-decen-1-yl-acetat und (*3S*,*6S*)-3-Methyl-6-isopropenyl-9-decen-1-yl-acetat, (*3S*)-(*E*)-6-Isopropyl-3,9-dimethyl-5,8-decadienylacetat, (*1R*,*2S*)-cis-2-Isopropenyl-1-(4'-methyl-4'-penten-1'-yl)cyclobutanethanolacetat, (*5R,6E*)-5-Isopropyl-8-methyl-6,8-nonadien-2-on, 3-Methyl-3-butenyl-5-methylhexanoat; (*R*)-(-)-Lavandulylpropionat, (*R*)-(-)-Lavandulylacetat, (*R*)-2-Isopropenyl-5-methyl-4-hexenyl-(*S*)-2-methylbutanoat, [(*R*)-2,2-Dimethyl-3-(1-methylethyliden)cyclobutyl]methyl-(*S*)-2-methylbutanoat; (*1R*,*3R*)-[2,2-Dimethyl-3-(2-methylprop-1-enyl)cyclopropyl]methyl-(*R*)-2-methylbutanoat; (*1R*,*3R*)-cis-2,2-Dimethyl-3-isopropenyl-cyclobutanmethanolacetat; (*S*)-5-Methyl-2-(prop-1-en-2-yl)hex-4-enyl-3-methyl-2-butanonat; 2-Isopropyliden-5-methyl-4-hexen-1-ylbutyrat; (*E*)-2-Isopropyl-5-methyl-2,4-hexadienylacetat; (*6R*)-(*Z*)-3,9-Dimethyl-6-isopropenyl-3,9-decadienylpropionat; (*1R*,*3R*)-2,2-Dimethyl-3-(2-methylprop-1-enyl)cyclopropylmethyl-(R)-2-acetoxy-3-methylbutanoat; 2,6-Dimethyl-1,5-heptadien-3-yl-acetat; (*1R*,*3R*)-3-Isopropenyl-2,2-dimethylcyclobutylmethyl-3-methyl-3-butenoat; 2-(1,5,5-Trimethylcyclopent-2-enyl)ethylacetat; (*R*,*R*)-trans-(3,4,5,5-Tetramethylcyclopent-2-en-1-yl)methyl-2-methylpropanoat; *(1R,2R,3S)-*(2,3,4,4-Tetramethylcyclopentyl)methylacetat, (*Z*)-3,7-Dimethyl-2,7-octadienylpropionat, 3-Methylen-7-methyl-7-octenylpropionat, (*E*)-3,7-Dimethyl-2,7-octadienylpropionat und einer Kombination davon.

4. Verfahren zur wirksamen Bekämpfung von mindestens einem Schildlausschädling, umfassend die Diffusion von mindestens einer Semiochemikalie in einer Vorrichtung, die die Beeinflussung von Insekten ermöglicht und eine effektive Flussrate aufweist, die durch ein Verfahren nach einem der Ansprüche 1 bis 3 erhalten wird.

5. Verwendung einer effektiven Flussrate von mindestens einer Semiochemikalie in Kombination mit mindestens einer toxischen Substanz zur Bekämpfung von mindestens einem Schildlausschädling, **dadurch gekennzeichnet, dass** die effektive Flussrate zwischen 0,01 und 75 mg/ha/Tag liegt;
wobei die Semiochemikalie ausgewählt ist aus [(*1S,3S*)-2,2-Dimethyl-3-(prop-1-en-2-yl)cyclobutyl)]methyl-(*R*)-2-methylbutanoat, (3*S*,6*R*)-3-Methyl-6-isopropenyl-9-decen-1-yl-acetat und (*3S*,*6S*)-3-Methyl-6-isopropenyl-9-decen-1-yl-acetat, (*3S*)-(*E*)-6-Isopropyl-3,9-dimethyl-5,8-decadienylacetat, (*1R*,*2S*)-cis-2-Isopropenyl-1-(4'-methyl-4'-penten-1'-yl)cyclobutanethanolacetat, (*5R*,*6E*)-5-Isopropyl-8-methyl-6,8-nonadien-2-on, 3-Methyl-3-butenyl-5-methylhexanoat; (*R*)-(-)-Lavandulylpropionat, (*R*)-(-)-Lavandulylacetat, (*R*)-2-Isopropenyl-5-methyl-4-hexenyl-(*S*)-2-methylbutanoat, [(*R*)-2,2-Dimethyl-3-(1-methylethyliden)cyclobutyl]methyl-(*S*)-2-methylbutanoat; (*1R*,*3R*)-[2,2-Dimethyl-3-(2-methylprop-1-enyl)cyclopropyl]methyl-(*R*)-2-methylbutanoat; (*1R*,*3R*)-cis-2,2-Dimethyl-3-isopropenyl-cyclobutanmethanolacetat; (*S*)-5-Methyl-2-(prop-1-en-2-yl)hex-4-enyl-3-methyl-2-butanonat; 2-Isopropyliden-5-methyl-4-hexen-1-ylbutyrat; (*E*)-2-Isopropyl-5-methyl-2,4-hexadienylacetat; (*6R*)-(*Z*)-3,9-Dimethyl-6-isopropenyl-3,9-decadienylpropionat; (*1R*,*3R*)-2,2-Dimethyl-3-(2-methylprop-1-enyl)cyclopropylmethyl-(R)-2-acetoxy-3-methylbutanoat; 2,6-Dimethyl-1,5-heptadien-3-yl-acetat; (*1R*,*3R*)-3-Isopropenyl-2,2-dimethylcyclobutylmethyl-3-methyl-3-butenoat; 2-(1,5,5-Trimethylcyclopent-2-enyl)ethylacetat; (*R*,*R*)-trans-(3,4,5,5-Tetramethylcyclopent-2-en-1-yl)methyl-2-methylpropanoat; *(1R,2R,3S)-*(2,3,4,4-Tetramethylcyclopentyl)-methylacetat, (*Z*)-3,7-Dimethyl-2,7-octadienylpropionat, 3-Methylen-7-methyl-7-octenylpropionat, (E)-3,7-Dimethyl-2,7-octadienylpropionat und einer Kombination davon;
und wobei die effektive Flussrate geeignet ist, Schildläuse anzulocken und zu beeinflussen;

6. Verwendung der effektiven Flussrate nach Anspruch 5, wobei die Semiochemikalie ein Sexualpheromon ist.

7. Verwendung der effektiven Flussrate mindestens einer Semiochemikalie nach einem der Ansprüche 5 bis 6, wobei die Schildläuse ausgewählt sind aus den Familien der Diaspididae und Pseudococcidae.

8. Verwendung einer effektiven Flussrate nach einem der Ansprüche 5 bis 7, wobei die Schildläuse ausgewählt sind aus den Spezies *Aonidiella aurantii, Aspidiotus nerii, Diaspidiotus perniciosus, Planococcus ficus, Planococcus citri, Pseudococcus viburni, Pseudococcus longispinus, Dysmicoccus grasii, Phenacoccus madeirensis* und *Pseudococcus calceolariae.*

9. Verwendung einer effektiven Flussrate nach Anspruch 5, wobei die mindestens eine semiochemische Substanz mit einem geeigneten Träger auf einem beliebigen Medium, das diesen enthält, gemischt ist oder dieser damit getränkt ist.

10. Verwendung einer effektiven Flussrate nach Anspruch 5, wobei sich die Semiochemikalie in einer Vorrichtung befindet, die eine Reihe von Eigenschaften aufweist, um die Männchen mindestens einer Spezies der Coccoidea anzulocken und/oder zu beeinflussen.

## Revendications

1. Une méthode de détermination du débit efficace pour lutter efficacement contre au moins un insecte ravageur coccoïde comprenant les étapes suivantes :
a) préparation d'une matrice sémiochimique artificielle 1, comprenant :
i. *n* diffuseurs d'au moins un produit sémiochimique avec un flux d'émission initial-1, constant et connu, dans lequel *n* est le nombre de diffuseurs, *n* étant supérieur ou égal à 1,
ii. au moins un bloc comprenant *m* diffuseurs dudit au moins un produit sémiochimique ayant un flux d'émission constant égal au flux d'émission initial-1 de l'étape i), associé à un dispositif de capture des insectes mâles, dans lequel *m* est le nombre de diffuseurs, *m* étant supérieur ou égal à 1,
iii. au moins un bloc comprenant *m* diffuseurs dudit au moins un produit sémiochimique avec un flux d'émission constant différent du flux d'émission initial-1 des étapes i) et ii), associé à un dispositif de capture des insectes mâles, dans lequel *m* est le nombre de diffuseurs, *m* étant supérieur ou égal à 1,
b) obtention du flux efficace 1, correspondant au flux du diffuseur à l'étape iii) dont le dispositif de capture d'insectes comporte plus d'insectes mâles capturés,
c) préparation d'une matrice sémiochimique artificielle 2 comprenant :
iv. *n* diffuseurs dudit au moins un produit sémiochimique avec un flux d'émission égal au flux efficace 1 obtenu à l'étape b), *n* étant le nombre de diffuseurs, *n* étant supérieur ou égal à 1,
v. au moins un bloc comprenant *m* diffuseurs dudit au moins un produit sémiochimique avec un flux d'émission égal au flux efficace 1 de l'étape b), associé à un dispositif de capture des insectes mâles, dans lequel *m* est le nombre de diffuseurs, *m* étant supérieur ou égal à 1,
vi. au moins un bloc comprenant *m* diffuseurs dudit au moins un produit sémiochimique avec un flux d'émission constant autre que le flux effectif 1 de l'étape b), associé à un dispositif de capture des insectes mâles, dans lequel *m* est le nombre de diffuseurs, *m* étant supérieur ou égal à 1,
d) obtention du flux efficace 2, correspondant au flux du diffuseur de l'étape vi) dont le dispositif de capture d'insectes comporte plus d'insectes mâles capturés,
e) obtention du flux efficace final, en répétant l'étape c) x fois jusqu'à ce que les diffuseurs ayant un flux d'émission égal au flux efficace x, utilisés pour préparer la matrice sémiochimique artificielle x, comprennent un plus grand nombre d'insectes mâles capturés,
f) obtention du nombre efficace de diffuseurs par unité de surface, en préparant au moins une matrice sémiochimique artificielle dans laquelle le flux d'émission est constant et égal au flux efficace final de l'étape e) et le nombre de diffuseurs est variable et différent de celui utilisé dans les étapes précédentes, et qui permet de lutter efficacement contre au moins un insecte ravageur de type coccoïde,
g) obtention du débit efficace à l'aide du produit du flux efficace final et du nombre efficace de diffuseurs par unité de surface.

2. La méthode de détermination du débit efficace pour lutter efficacement contre au moins un insecte ravageur coccoïde, selon la revendication 1, dans laquelle l'au moins un produit sémiochimique est une phéromone sexuelle.

3. La méthode de détermination du débit efficace pour lutter efficacement contre au moins un insecte ravageur coccoïde, selon l'une quelconque des revendications 1 à 2, dans laquelle l'au moins un produit sémiochimique est choisi parmi [(1S,3S)-2,2-diméthyl-3-(prop-1-en-2-yl)cyclobutyl)]méthyl (R)-2-méthylbutanoate, acétate de (3S, 6R)-3-méthyl-6-isopropenyl-9-décen-1-yl et acétate de (3S, 6S)-3-méthyl-6-isopropenyl-9-décen-1-yl, acétate de (3S)-(E)-6-isopropyl-3,9-diméthyl-5,8-décadiényl, (1R,2S)-cis-2-isopropényl-1-(4'-méthyl-4'-penten-1'-yl)-cyclobutane acétate d'éthanol, (5R, 6E)-5-isopropyl-8-méthyl-6,8-nonadiène-2-one, 3-méthyl-3-butényl 5-méthylhexanoate ; (R)-(-)-lavandulyl propionate, (R)-(-)-lavandulyl acétate, (R)-2-isopropenyl-5-méthyl-4-hexenyl (S)-2-methylbutanoate, [(R)-2,2-diméthyl-3-(1-) méthyléthylidène)-cyclobutyl]méthyle (S)-2-méthylbutanoate ; (1R,3R)-[2,2-diméthyl-3-(2-méthylprop-1-enyl)cyclopropyl]méthyle (R)-2-méthylbutanoate ; acétate de (1R,3R)-cis-2,2-diméthyl-3-isopropenyl-cyclobutaneméthanol ; (S)-5-méthyl-2-(prop-1-en-2-yl)-hex-4-enyl 3-méthyl-2-butanonate ; butyrate de 2-isopropylidène-5-méthyl-4-hexène-1-yl ; acétate de (E)-2-isopropyl-5-méthyl-2,4-hexadiényl ; (6R)-(Z)-3,9-diméthyl-6-isopropényl-3,9-décadiényl propionate ; (1R,3R)-2,2-diméthyl-3-(2-méthylprop-1-ényl)-cyclopropyl-méthyl (R)-2-acétoxy-3-méthylbutanoate ; acétate de 2,6-diméthyl-1,5-heptadiène-3-yl ; (1R,3R)-3-isopropenyl-2,2-dimethylcyclobutylmethyl 3-methyl-3-butenoate ; 2-(1,5,5-triméthylcyclopent-2-enyl)-éthyle acétate; (R,R)-trans-(3,4,5,5-tétraméthylcyclopent-2-en-1-yl)-méthyl 2-méthylpropanoate ; (1R,2R,3S)-(2,3,4,4-tétraméthylcyclopentyl)-acétate de méthyle, (Z)-3,7-diméthyl-2,7-octadienyl propionate, 3-méthylène-7-méthyl-7-octenyl propionate, (E)-3,7-diméthyl-2,7-octadienyl propionate et une combinaison de ceux-ci.

4. Une méthode pour lutter efficacement contre au moins un insecte ravageur coccoïde, comprenant la diffusion d'au moins un produit sémiochimique dans un dispositif permettant l'affectation des insectes, avec un débit efficace obtenu au moyen d'une méthode selon l'une quelconque des revendications 1 à 3.

5. Utilisation d'un débit efficace d'au moins un produit sémiochimique combiné à au moins une substance toxique pour lutter contre au moins un insecte ravageur coccoïde, **caractérisée en ce que** le débit efficace est compris entre 0,01 et 75 mg/ha/jour ;
dans laquelle le produit sémiochimique est choisi parmi parmi [(1S,3S)-2,2-diméthyl-3-(prop-1-en-2-yl)cyclobutyl)]méthyl (R)-2-méthylbutanoate, acétate de (3S, 6R)-3-méthyl-6-isopropenyl-9-décen-1-yl et acétate de (3S, 6S)-3-méthyl-6-isopropenyl-9-décen-1-yl, acétate de (3S)-(E)-6-isopropyl-3,9-diméthyl-5,8-décadiényl, (1R,2S)-cis-2-isopropényl-1-(4'-méthyl-4'-penten-1'-yl)-cyclobutane acétate d'éthanol, (5R, 6E)-5-isopropyl-8-méthyl-6,8-nonadiène-2-one, 3-méthyl-3-butényl 5-méthylhexanoate ; (R)-(-)-lavandulyl propionate, (R)-(-)-lavandulyl acétate, (R)-2-isopropenyl-5-méthyl-4-hexenyl (S)-2-methylbutanoate, [(R)-2,2-diméthyl-3-(1-méthyléthylidène)-cyclobutyl]méthyle (S)-2-méthylbutanoate ; (1R,3R)-[2,2-diméthyl-3-(2-méthylprop-1-enyl)cyclopropyl]méthyle (R)-2-méthylbutanoate ; acétate de (1R,3R)-cis-2,2-diméthyl-3-isopropenyl-cyclobutaneméthanol ; (S)-5-méthyl-2-(prop-1-en-2-yl)-hex-4-enyl 3-méthyl-2-butanonate ; butyrate de 2-isopropylidène-5-méthyl-4-hexène-1-yl ; acétate de (E)-2-isopropyl-5-méthyl-2,4-hexadiényl ; (6R)-(Z)-3,9-diméthyl-6-isopropényl-3,9-décadiényl propionate ; (1R,3R)-2,2-diméthyl-3-(2-méthylprop-1-ényl)-cyclopropyl-méthyl (R)-2-acétoxy-3-méthylbutanoate ; acétate de 2,6-diméthyl-1,5-heptadiène-3-yl; (1R,3R)-3-isopropenyl-2,2-dimethylcyclobutylmethyl 3-methyl-3-butenoate ; 2-(1,5,5-triméthylcyclopent-2-enyl)-éthyle acétate; (R,R)-trans-(3,4,5,5- tétraméthylcyclopent-2-en-1-yl)-méthyl 2-méthylpropanoate ; (1R,2R,3S)-(2,3,4,4-tétraméthylcyclopentyl)-acétate de méthyle, (Z)-3,7-diméthyl-2,7-octadienyl propionate, 3-méthylène-7-méthyl-7-octenyl propionate, (E)-3,7-diméthyl-2,7-octadienyl propionate et une combinaison de ceux-ci ;
et dans lequel le débit efficace permet d'attirer et d'affecter les insectes coccoïdes.

6. L'utilisation d'un débit efficace, selon la revendication 5, dans laquelle la substance sémiochimique est une phéromone sexuelle.

7. L'utilisation d'un débit efficace d'au moins un produit sémiochimique, selon l'une quelconque des revendications 5 à 6, dans laquelle les insectes coccoïdes sont choisis parmi les familles Diaspididae et Pseudococcidae.

8. L'utilisation d'un débit efficace selon l'une quelconque des revendications 5 à 7, dans laquelle les insectes coccoïdes sont choisis parmi les espèces *Aonidiella aurantii, Aspidiotus nerii, Diaspidiotus perniciosus, Planococcus ficus, Planococcus citri, Pseudococcus viburni, Pseudococcus longispinus, Dysmicoccus grasii, Phenacoccus madeirensis et Pseudococcus calceolariae.*

9. L'utilisation d'un débit efficace, selon la revendication 5, dans laquelle l'au moins un produit sémiochimique est mélangé ou imprégné dans un support adéquat sur tout type de milieu le contenant.

10. L'utilisation d'un débit efficace selon la revendication 5, dans laquelle le produit sémiochimique se trouve dans un dispositif ayant une série de caractéristiques pour attirer et/ou affecter les mâles d'au moins une espèce de la famille des Coccoidea.
